# EUROPEAN PATENT SPECIFICATION

(11) **EP 4 273 007 B1**
(45) Date of publication and mention of the grant of the patent: **25.11.2026**
(21) Application number: 22171860.4
(22) Date of filing: 05.05.2022
(51) Int. Cl.: B60T 8/1755, B60W 30/02, B60W 50/00, B60W 50/06

(54) **VEHICLE MOTION CONTROL**
FAHRZEUGBEWEGUNGSSTEUERUNG
COMMANDE DE MOUVEMENT DE VÉHICULE

(43) Date of publication of application: 08.11.2023
(73) Proprietor: Astemo Europe GmbH, 85445 Schwaig-Oberding (DE)
(72) Inventor: WYLIE, Paul, 5301 LX Zaltbommel (NL)
(74) Representative: V.O.

(56) References cited:
- WO-A1-2004/071800
- WO-A1-93/11481
- DE-A1- 102006 032 726
- DE-A1- 102010 031 608
- US-A1- 2018 056 962
- US-A1- 2019 324 450

## Description

The present invention pertains to a vehicle motion control unit.

The present invention further pertains to a vehicle provided with a vehicle motion control unit.

The present invention still further pertains to a method of controlling motion of a vehicle. As background, US 2019/324450 A1 describes secure communication between vehicle components via bus guardians; DE 10 2006 032 726 A1 describes a method for synchronizing components of a motor vehicle brake system and an electronic brake control system; DE 102010 031 608 A1 describes an electronic brake system and a method for operating an electronic brake system.

A state of the art premium type car may contain over a hundred electronic control units (ECUs) that each are responsible for a particular function like steering, engine power control, braking, environment monitoring, climate control and the like. Typically, an ECU does no not operate autonomously, but operates in cooperation with other ECU's. For example an ECU for braking control cooperates with an ECU for steering control and an ECU for engine power control for optimal vehicle stability. Usually the various ECUs are communicatively coupled to each other by a network, e.g. CAN, ethernet or a combination of networks. This facilitates innovation, in that it is relatively easy to add or to exchange ECUs. Indeed vehicle motion control system architecture complexity has been increasing over the years, with an average of +5 ECUs per year. Whereas for example a vehicle motion control system for a premium sedan car manufactured 25 years ago comprised about 20 ECUs, this number has increased to more than a hundred nowadays. Control system complexity will continue to increase further as a result of developments in the field of autonomous driving. The increasing system complexity also involves the risk of an unforeseen interference of components in the motion control system. Accordingly, there is a need to provide measures that mitigate that risk.

### SUMMARY

According to a first aspect of the present invention a vehicle motion control system is provided that comprises a control system network and, communicatively coupled thereto a central controller, and a plurality of actuator control modules each for controlling respective sets of one or more actuators to control a motion of the vehicle, according to independent claim 1. The central controller is configured to transmit a respective instruction message to one or more of the plurality of actuator control modules. An instruction message to an actuator control module instructs that actuator control module to cause its set of actuators to perform an action as a function of time in a common reference time frame. A motion control action is centrally controlled by the central controller and performed by motion control actuators. E.g. if the motion control action is a braking of the vehicle, the motion control actuators should cooperate to exert a braking force onto wheels of a vehicle. Therewith typically the braking force onto the front wheels is greater than that exerted onto the back wheels. Also, in normal circumstances, the braking force at both sides of the vehicle should not differ too much. In embodiments of the improved vehicle motion control system the central controller transmits a respective instruction message to each of the brake control modules that instructs the receiving brake control module to cause its one or more brake actuators to exert a braking force as a function of time in a common reference time frame. Upon receipt of the instruction message the brake control module executes said instruction. That is, it brings about that its one or more brake actuators exert the braking force as a function of time in the common time frame. Hence, even in case the brake control modules, due to interference by other network traffic do not receive their instruction messages simultaneously, it is still achieved that they perform their instruction in a coherent manner by referring to the absolute time in the common reference time frame rather than primarily by referring to the point in time that the message is received. This mitigates dispersions in the application of a brake torque.

The measure is also applicable for control of other motion control actuators, such as actuators involved in steering a vehicle. Advanced vehicles have a proper steering actuator at each wheel. A more coherent operation of the steering actuators is achieved by specifying that their operation is to be performed in accordance with a function of time in the common reference time frame. This contributes to an improved stability of the vehicle. In other example the central controller centrally coordinates a motion control operation to be performed by brake actuators and steering actuators under control of their respective actuator control modules. Also in that example vehicle stability is improved when the coordinated motion control operation is not disturbed due to variations in a delay with which the actuator control modules receive the motion control instructions. In a still further example the central controller is enable to more coherently control a plurality of motors that each drive a respective wheel of a vehicle. In a further elaboration thereof the central controller controls the plurality of motors further in a manner that is coherent with the steering actuators acting on the wheels.

When the central controller at a first point in time submits an instruction message to a target actuator control module, e.g. for controlling brake actuator, a steering actuator or a motor, it specifies in the message an indication of a second point in time at which the target actuator control module is to bring the instruction into effect through the one or more actuators controlled by that target actuator. The second point in time can be a start of an activation interval during which the target actuator control module continues to control its associated actuator in accordance with the instruction message. In some examples the instruction message does not specify an end of the time frame. For example the central controller sends an instruction message to the actuator control modules that control the motors that drive the wheels of the vehicle to maintain operation at a predetermined speed, and at the second point in time the actuator control modules bring about that their associated motors maintain that speed until a new motion control instruction message is received that revokes the earlier motion control instruction message.

A time interval between the first point in time and the second point in time should not be too large to avoid that an unacceptable delay occurs, e.g. a delay which is larger than a delay due to a human reaction time. Preferably the time interval should be at least an order of magnitude shorter than a time interval associated with a human reaction time. For example a time interval not exceeding 10 ms between the first point in time and the second point in time would not be noticeable for a human driver. In some embodiments the central controller receives driving instructions from an autonomous vehicle movement control system which has a substantially shorter reaction time than a human being. In particular for these embodiments it favorable if the specified time of execution of the instruction is at most 1 ms later than the time of transmission of the instruction message. Therewith any potential extension of a braking distance is not more than a few cm. In still more preferred embodiments the specified time of execution of the instruction is at most 0.1 ms later than the time of transmission of the instruction message. Therewith a potential extension of a braking distance is not more than a few mm. Nevertheless, circumstances may be contemplated wherein a substantially larger time interval between the first point in time and the second point in time is acceptable. In an example the central controller issues an instruction message with a long time interval in case it predicts a long time in advance that the vehicle needs to decelerate. Should circumstances change, the central controller can send a subsequent instruction message that 'overwrites' the earlier instruction message before the motion control actuator has executed the earlier instruction message and that causes the motion control actuator to execute the subsequent instruction message, unless that subsequent instruction message is in its turn overwritten by another subsequent instruction message.

In any case the specification of a non-zero time interval between the first point in time and the subsequent second point in time mitigates a dispersion in the execution times of mutually cooperating motion control actuators, i.e. a set of two or more motion control actuators that receive a respective instruction from the central controller to bring about a motion control action of the vehicle. If incidentally the instruction message is received by one of the motion control actuators at a third point in time later than the specified second point in time, it is still achieved that the dispersion between the respective points in time wherein the motion control actuators execute their instructions is reduced. It is therewith presumed that a motion control actuator that receives an instruction message at a third point in time later than the specified second point in time immediately starts execution upon receipt of the instruction message.

Nevertheless, in preferred embodiments the time-interval is large enough to substantially avoid a dispersion between execution times of mutually cooperating motion control actuators. In preferred embodiments the time-interval is at least 1 microsecond. In still more preferred embodiments the time-interval is at least 10 microseconds.

In exemplary embodiments the action to be performed as a function of time in a common reference time frame is an action to be performed during an activation interval starting at the second point in time. As an example, the action to be performed by a brake actuator control module is to cause its set of one or more brake actuators to exert a braking force during the specified activation interval. In a further elaboration thereof the braking force to be exerted is specified as constant during the activation interval, in another elaboration thereof the braking force to be exerted is specified as gradually changing during the activation interval. As an example, the action to be performed by a steering actuator control module is to cause its set of one or more steering actuators to change a motion of the vehicle by gradually changing an orientation of a wheel during the activation interval.

In some embodiments, the time within the common time frame is maintained centrally within the central controller, for example by a crystal oscillator. Each of the actuator control modules that need to coherently operate in the common time frame comprises a corresponding clock. In some examples the clocks of those actuator control modules are regularly updated by a synchronization message to be in synchronicity with the central clock. In one of these examples the central controller reserves the control system network to be used exclusively for distribution of the synchronization message. In a preferred embodiment the synchronization message is broadcasted to all actuator control modules that require synchronization. In other examples the central controller monitors the control system network for determining a current message load, and upon determining that the message load is sufficiently low it transmits or broadcasts the synchronization message. In further examples the central controller normally postpones transmission or multicast of a synchronization message until occurrence of a sufficiently low network load, but in case it determines that a synchronization message should be send before the situation has occurred that the network load is sufficiently low, the central controller reserves the control system network exclusively for distribution of the synchronization message.

In other embodiments, a dedicated clock network is provided that enables the actuator control modules to determine the time in the common time frame or to synchronize their clock in accordance with the time in the common time frame.

Taking into account that typically many other devices and controllers are coupled to the control system network there is a further risk that a malfunctioning device or controller accidently sends an instruction message to a vital actuator control module such as a brake control module or a steering control module. Such an instruction message would interfere with the normal operation of the actuator control module receiving the message from the malfunctioning device or controller. In that case the actuator control module would not be capable to perform an instruction message from the central controller at the time specified for execution of the instruction from the central controller, and therewith fail to achieve an operation of its associated actuator that is coherent with that of other actuators. It is a further concern that some devices may wirelessly communicate with the internet, and as a result of a digital attack be caused to transmit fake instruction messages to a vital actuator control module.

Having in mind these concerns, in some embodiments the central controller is configured to prepare an encrypted instruction message conveying an instruction for an actuator control module and to transmit the encrypted instruction with the control system network to said actuator control module. In these embodiments, the actuator control module is configured to receive the encrypted instruction message, to decrypt the received encrypted instruction message, to retrieve the instruction conveyed therewith and to cause its at least one actuator to perform said motion control action.

This measure also mitigates the risk of a potential dispersion by messages from a malfuncting component as it enables an actuator control module to distinguish a true instruction message from an instruction message that accidently or on purpose is directed to the actuator control component by a non compatible third party component added to the network. This mitigates the risk that a vital motion control actuator such as a brake control actuator or a steering control activator is activated or deactivated by unforeseen messages distributed via the control system network as a result of which it could not timely respond to an instruction from the central controller.

It is noted that the encrypted instruction message does not need to convey the instruction itself in an encrypted format, provided that the actuator control module to which the message is directed is capable to distinguish the message as an authenticated message from the central controller. Hence in an advantageous embodiment, the encrypted instruction message comprises a payload carrying the original instruction and a digital signature that enables the receiving actuator control module to authenticate the message, i.e. to verify that the message was transmitted by the central controller, and to verify integrity i.e. verify that the message was not modified during its transmission. In this embodiment the actuator control module does not need to decrypt the instruction itself but it only needs to verify its authenticity and integrity. In one example the central controller generates its digital signature using a private key, and enables the actuator control module to verify the digital signature using a public key. In other examples encryption of the message by the central controller and decryption of the message by an actuator control module is realized with a symmetric key algorithm. I.e the actuator control module decrypts the message using the same key as the key used by the central controller for its encryption.

In some embodiments the actuator control module is configured to request the central controller to resend a message if it determines that the received message is authentic but fails integrity requirements. Provided that the time interval between the first point in time and the second point in time is sufficiently large, the message that is resend by the central controller can reach the actuator control module in time for the actuator control module to bring about that its associated actuator operates in a manner coherently with other actuators.

In other embodiments the central controller is configured to encode the message for transmission by the control system network allowing the receiving actuator control module to perform an error detection and correction procedure. As an example, the central controller is configured to encode the encrypted message for transmission according to a Reed-Solomon code, and the actuator control module is configured to decode the received message, therewith correcting errors if any, and to subsequently perform a decryption verify authenticity. Hence, even in the event of errors occurring in the instruction message during its transmission in the control system network, the actuator control module is capable to correctly perform the instruction as it was generated by the central controller. This obviates a retransmission of the message. A time interval between the first point in time and the second point in time can therewith be smaller which improves system response time.

Even in embodiments wherein instruction messages directed to vital actuator control modules are transmitted in an encrypted form it is not necessary that all message transmissions are encrypted. In some examples the control system network is also used for transmission of other messages, e.g. for control of less vital functionalities, e.g. control of interior temperature or lighting. These cannot interfere with the operation of vital actuator control module as the actuator control module, even when accidently receiving such messages, regardless whether or not they are encrypted, is configured to detect that such messages do not originate from the central controller.

According to a further aspect of the present invention, a vehicle is provided that comprises in addition to a vehicle control system as disclosed herein a pair of rear wheels and a pair of front wheels wherein the respective sets of one or more motion control actuators are provided to control motion of respective ones of the wheels.

According to a still further aspect of the present invention, a smart brake actuator is provided that comprises a brake actuator for a vehicle and a brake actuator control module for controlling the brake actuator. The brake actuator control module is configured to receive a brake control instruction message conveying a brake control instruction that instructs the brake actuator control module to cause the brake actuator to perform a brake action as a function of time in a common reference time frame. This comprises instructing the brake actuator control module not to cause the brake actuator to perform the brake action before a specified reference point in time in the common reference time frame. The brake actuator control module having received the brake control instruction message is configured to cause the brake actuator to start performing the brake action at the specified reference point in time if that succeeds a time of receipt of the message, and to cause the brake actuator to start performing the brake action immediately upon receipt of the brake control instruction message otherwise.

In an embodiment of the smart brake actuator, the brake actuator control module is configured to receive an encrypted brake control instruction message, to decrypt the received encrypted instruction message to retrieve the brake control instruction conveyed therewith, to verify authenticity of the received encrypted instruction message and to cause the brake actuator to perform the brake action specified subject to confirming that the received encrypted instruction message is authentic.

According to again a further aspect of the present invention, a method of controlling operation of a plurality of motion control actuators in a vehicle, according tp independent claim 14 is provided. The method comprises a process wherein a central controller transmits respective instruction messages to respective ones of the motion control actuators, which instruction message conveys a motion control instruction that instructs the receiving actuator control module to cause an associated set of one or more motion control actuators to perform a motion control action as a function of time in a common reference time frame. Upon receipt of a motion control instruction the motion control actuator accordingly executes the instruction conveyed therewith by causing its associated set of one or more motion control actuators to perform the motion control action as a function of time in the common reference time frame.

In an embodiment of the method the central controller prepares an encrypted instruction message to convey the motion control instruction, it transmits the encrypted instruction message via the control system network to an actuator control module and the actuator control module after having received the encrypted instruction message, decrypts the received encrypted instruction message to retrieve the motion control instruction conveyed therewith, and subject to confirming that the conveyed motion control instruction is authentic causes its at least one motion control actuator to perform the motion control action.

### BRIEF DESCRIPTION OF THE DRAWINGS

These and other aspects are disclosed in more detail with respect to the drawings. Therein:
FIG. 1 shows an embodiment of a vehicle control system;
FIG. 2 shows aspects of the vehicle control system of FIG. 1 in more detail;
FIG. 3 shows an embodiment of a method for controlling a vehicle;
FIG. 4 shows an example of a smart actuator comprising an actuator control module and an actuator controlled by the actuator control module;
FIG. 5 shows a further embodiment of a vehicle control system.

### DETAILED DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features.

The invention is described more fully hereinafter with reference to the accompanying drawings, in which embodiments of the invention are shown. In the drawings, the absolute and relative sizes of systems, components, modules, and units may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

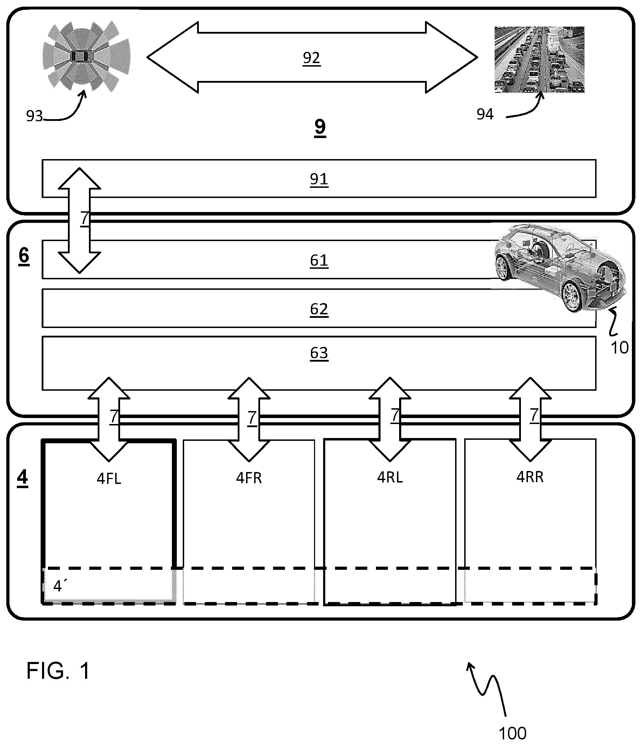

FIG. 1 shows an embodiment of a vehicle control system. By way of example the vehicle control system shown therein comprises a vehicle motion control unit 100 and a vehicle movement control unit 9. The vehicle movement control unit 9 is configured to enable a vehicle 10 to autonomously move towards a destination. For that purpose the vehicle movement control unit 9 comprises vehicle movement decision logic 91 to autonomously drive the vehicle 10. The vehicle movement decision logic 91 is configured to receive environment sensor signals from environment sensors 93, for example including Lidar, 3D-camera's and the like and traffic infra structure signals from a traffic infra structure interface 94. The vehicle movement decision logic 91 is further configured to have access to big data computing resources 92.
With this information the vehicle movement decision logic 91 is configured to provide driving instructions therewith relieving a driver from the burden of providing the driving instructions. In other embodiments of the vehicle control system a vehicle movement control unit 9 is absent and the vehicle control system has sensors attached to user input devices, such as a steering wheel, pedals enabling the driver to provide driving instructions. In again other embodiments the vehicle control system normally obtains the driving instructions from a vehicle movement control unit 9 but requests a driver to provide driving instructions if it detects that driving instructions from the vehicle movement control unit 9 are not reliable. In still further embodiments the vehicle control system normally obtains the driving instructions from a driver, but it obtains the driving instructions from a vehicle movement control unit 9 if it detects that the driving instructions from the driver are not reliable.

The driving instructions from a driver or from the vehicle movement control unit 9 are communicated via a network with the central controller 6. The central controller 6 amongst others has motion control functions 61, chassis level sensor signal processing functions 62, e.g. for control of Yaw, Steering angle, and the like and combined actuator control functions 63, such as ESP, ABS and the like. By way of example four smart actuators 4FL, 4FR, 4RL and 4RR are shown. These smart actuators include the combination of an actuator and an associated actuator control module, in this example the combination of a brake actuator and its associated brake actuator control module. Other examples of smart actuators are a smart steering actuator comprising a steering actuator and its associated steering actuator control module, a smart drive actuator comprising a drive actuators, i.e. motors to drive wheels of the vehicle and their proper control modules, and smart suspension actuators comprising suspension actuators and associated control modules.

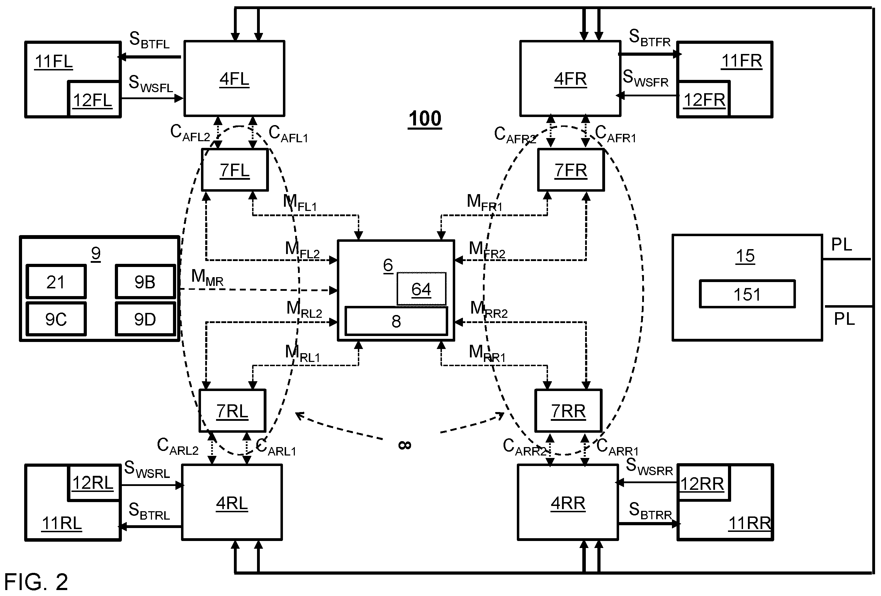

FIG. 2 shows aspects of the vehicle motion control unit 100 as comprised in a vehicle control system of FIG. 1 in more detail. In this description the wording 'smart actuator' is used to denote a combination of an actuator control module and an associated set of one or more actuators, i.e. the actuators controlled by the actuator control module. Typically each actuator control module controls one actuator, but in some examples an actuator control module controls more than one actuator. An example of a smart actuator is a smart brake actuator, i.e. a brake actuator control module and its associated brake actuator(s). A 'smart actuator receiving an instruction' is to be understood as the 'actuator control module of the smart actuator receiving an instruction message'.

In FIG. 2 it is schematically shown how respective smart brake actuators 4FL, 4FR, 4RL and 4RR act on respective wheels 11FL, 11FR, 11RL, 11RR of the car 10. Therein the suffixes FL, FR, RL, RR added to the reference numerals respectively indicate front left, front right, rear left, rear right. As shown each of the wheels 11FL, 11FR, 11RL, 11RR is provided with a proper wheel sensor 12FL, 12FR, 12RL, 12RR that provides a respective indication S_{WSFL}, S_{WSFR}, S_{WSRL}, S_{WSRR} of the rotational velocity of the wheel. When braking the vehicle 10, the smart brake actuators 4FL, 4FR, 4RL and 4RR respectively act upon the wheels 11FL, 11FR, 11RL, 11RR by applying a braking torque S_{BTFL}, S_{BTFR}, S_{BTRL}, S_{BTRR} in accordance with a motion control instruction conveyed by a motion control instruction message issued by the central controller 6 in response to a driving instructions from a vehicle movement control unit 9 or from a driver.

In an exemplary embodiment as shown in FIG. 2, the vehicle interface modules 7FL, 7FR, 7RL and 7RR provide for a conversion of messages from a first message protocol to a second message protocol and reversely. The first message protocol is for example an Ethernet protocol for the messages exchanged with the central controller 6. The second message protocol is for example a CAN-protocol for communication with the smart actuators 4FL, 4FR, 7RL and 7RR. In the embodiment shown, the indications S_{WSFL}, S_{WSFR}, S_{WSRL}, S_{WSRR} for the rotational velocity of the wheel provided by the wheel sensors 12FL, 12FR, 12RL, 12RR is conveyed as respective CAN protocol messages to the central controller 6 to the vehicle interface modules 7FL, 7FR, 7RL and 7RR and converted therein to an Ethernet message for the central controller 6.

In other embodiments a control system network is provided wherein messages between the central controller 6 and the peripheral components, smart actuators, input elements and the like are passed according to a common message protocol, without a conversion step, e.g. only according to the CAN-protocol, or only using an Ethernet protocol.

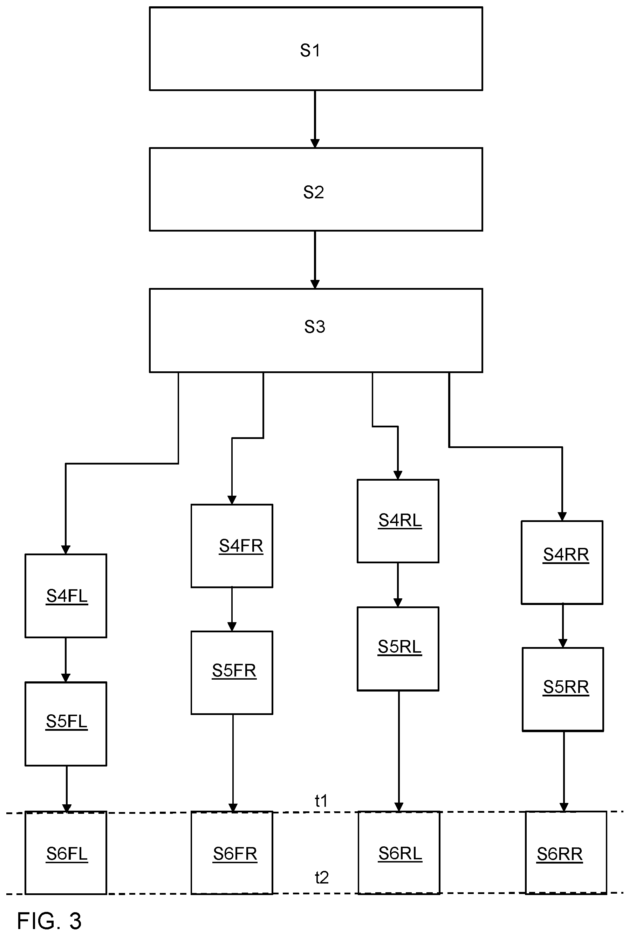

FIG. 3 illustrates an exemplary method. Upon receiving in step S1 a driving instruction indicative for a desired deceleration of the vehicle, the central controller 6 computes in step S2 which action is to be performed by the smart brake actuators 4FL, 4FR, 4RL and 4RR as a function of time. Typically this requires that smart brake actuators 4FL, 4FR need to apply an approximately equal, relatively high braking torque S_{BTFL}, S_{BTFR}, and that the smart brake actuators 4BL, 4BR need to apply an approximately equal, relatively low braking torque S_{BTRL}, S_{BTRR}, i.e. lower than the relatively high braking torque that is to be applied by the smart brake actuators 4FL, 4FR.

In step S3, the central controller 6 accordingly transmits via the control system network to each of the smart brake actuators 4FL, 4FR, 4RL and 4RR a respective motion control instruction message that specifies the motion control action, here the braking force to be applied, as a function of time in the common reference time frame. As schematically illustrated in FIG. 3, the motion control instruction messages may be received in a respective step S4FL, S4FR, S4RL and S4RR by the smart brake actuators 4FL, 4FR, 4RL and 4RR at mutually different points in time

Upon receipt, the smart brake actuators each extract in a respective step S5FL, S5FR, S5RL and S5RR their proper motion control instruction from their respective motion control instruction message.

Subsequently, each of the smart brake actuators cause their brake actuator to apply S6FL, S6FR, S6RL, S6RR the specified torque as a function of time in the common reference time frame. Due to the fact that the motion control instruction specifies the required motion control action to be performed as a function in a common time frame the smart brake actuators are configured to properly coordinate their operation. By way of example the motion control instruction for each of the smart brake actuators instructs that their actuators apply a brake force in the activation interval t1-t2. In response thereto, each of the smart brake actuators starts applying the brake force if the clock in the common reference time frame indicates the point in time t1 and stops applying the brake force if the clock in the common reference time frame indicates the point in time t2. In another example, the central controller 6 transmits the respective motion control instruction message to each of the smart brake actuators 4FL, 4FR, 4RL and 4RR at mutually different points in time. Also in that example it is achieved that a coordinate motion control action is achieved by the smart brake actuators 4FL, 4FR, 4RL and 4RR due to the fact that the action to be performed is specified in accordance with the common time frame. It is not always necessary that a coordinated motion control action requires that the actuators operate simultaneously. In some examples the respective motion control instruction messages to the smart brake actuators 4FL, 4FR, 4RL and 4RR specifies that their actuators are to be activated at mutually different points in time in the common time frame in order to perform the coordinated motion control action.

In another example the driving instruction received in step S1 specifies a desired change of driving direction. And the central controller 6 computes in step S2 which action is to be performed by a plurality of smart steering actuators, each of which is configured to control a respective wheel orientation. In some examples each of the wheels of the vehicle has a respective steering actuator. In some examples the central controller in step S2 also transmits a respective motion control instruction message to a motor configured to drive each wheel.

In some embodiments of the method of FIG. 3, the central controller in step S3 prepares an encrypted instruction message conveying the motion control instruction for transmission via the control system network. The actuator control module that receives the encrypted instruction message in step S4FL, S4FR, S4RL, and S4RR, decrypts the received encrypted instruction message to retrieve the motion control instruction conveyed therewith, and subject to confirming that the conveyed motion control instruction is authentic causes its at least one motion control actuator to perform said motion control action. The encryption-decryption procedure also contributes to a more reliable operation of a motion control actuator in cooperation with other motion control actuators, as it prevents that one motion control actuator responds in a deviating manner due to a spurious message that does not originate from the central controller. Hence, also in case the encryption-decryption procedure is performed without restricting the motion control actuators to operate according to a function of time in a common time frame a more coherent operation of the motion control actuators is achieved. A dispersion in time due to the encryption-decryption procedure can be avoided with a requirement that the motion control actuators perform the decryption procedure in a same number of clock cycles. However, if the motion control actuators are instructed to operate according to a function of time in a common time frame, this requirement is not necessary, as differences in the time for executing the decryption step do not affect the prescribed time-dependency of the function in the common time frame.

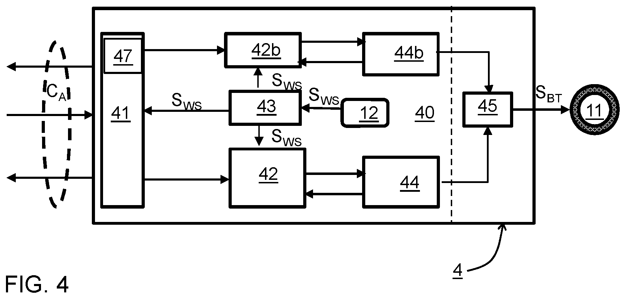

FIG. 4 shows an example of a smart actuator 4, for example to be incorporated as a smart actuator 4FL, 4FR, 7RL and 7RR in the system of FIG. 2. The smart actuator 4 has a CAN-bus interface 41, enabling it to communicate with other system elements, for example to receive a motion control instruction message that specifies the motion control action, here the braking force to be applied, as a function of time in the common reference time frame. It is noted that so far it is presumed that the motion control system 1 operates in a normal operational mode. Typically also fail safe measures, not described here in full detail, are provided that become operational in exceptional cases that normal operation is not possible.

As shown in FIG. 4, the smart actuator 4 has a clock 47 that enables the smart actuator 4 to perform the motion control action specified in the motion control instruction as a function in a common time frame. In some examples the vehicle motion control unit is configured to transmit a synchronization message to said actuator control module enabling the actuator control module to synchronize its local clock 47 with the central clock. In some examples the central controller 6 is configured to multicast the synchronization message to each of said actuator control modules enabling said actuator control modules to synchronize their local clock with the central clock. In some examples the central controller 6 is configured to monitor network traffic and to transmit or multi-cast the synchronization messages if it detects that a network load is less than a predetermined threshold value. In other examples, e.g. if the central controller detects that the situation of a low network load did not occur during a time period longer than a threshold time period, the central controller 6 is configured to temporarily reserve the control system network exclusively for transmission or multi-casting of the synchronization message.

In other examples a separate clock channel is provided to distribute the synchronization message. In still other examples the smart actuator does not have a proper local clock, but reads the indication for the point in time from the clock channel.

Upon receipt of a motion control instruction message, the CAN-bus interface 41 causes a main driver control component 42 to compute main actuator driver control signals to control an actuator driver 44 in accordance with the function of time specified in the instruction message in the common reference time frame. The current point in time in the common time frame is indicated by the synchronized local clock 47 or by a clock channel. In response thereto the actuator driver 44 generates the time dependent drive signals for actuator 45. The main driver control component 42 further receives input signals S_{WS} from wheel speed acquisition component 43 coupled to wheel speed sensor 12. Therewith the main driver control component 42 can autonomously adapt the main actuator driver control signals where necessary to avoid slippage of the wheel 11. The CAN-bus interface 41 also transmits messages conveying the information indicative for the wheel speed as input for the central controller 6. In the example shown, the smart actuator 4 is provided with diagnostic means that allow a backup driver control component 42b to drive a backup actuator driver 44b to drive the actuator 45 in case a failure is detected.

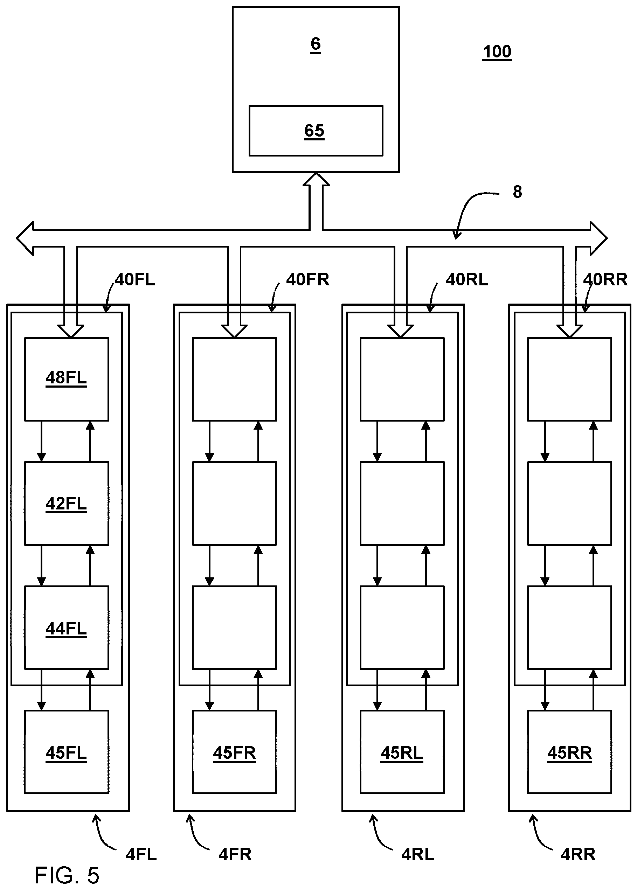

FIG. 5 shows a further embodiment of a vehicle motion control unit 100. In the embodiment of FIG. 5 the central controller 6 comprises a message encryption component 65. Therewith the central controller 6 is configured to prepare an encrypted instruction message conveying the motion control instruction and to transmit the encrypted instruction message via the control system network to an actuator control module.

In the further embodiment shown in FIG. 5, four smart brake actuators 4FL, 4FR, 4RL and 4RR are shown, that each comprise a respective actuator control module 40FL, 40FR, 40RL and 40RR and a respective brake actuator 45FL, 45FR, 45RL and 45RR controlled therewith. The components of the actuator control module 40FL are specified in more detail and discussed below. The other actuator control modules 40FR, 40RL and 40RR have an analogous architecture. As shown in FIG. 5, the actuator control module 40FL comprise a decryption component 48FL. Therewith the actuator control module is configured to receive the encrypted instruction message, to decrypt the received encrypted instruction message so as to retrieve the motion control instruction conveyed therewith. The motion control instruction is then executed by the main driver control component 42FL that computes main actuator driver control signals to control actuator driver 44FL in accordance with the function of time specified in the instruction message in the common reference time frame.

A primary role of the encryption-decryption steps is to enable the actuator control modules 40FL, 40FR, 40RL and 40RR to distinguish messages from the central controller from potential other messages. Other messages could potentially be received by an actuator control module due to a malfunctioning component coupled to the control system network 8, e.g. in case of hardware errors or as an attempt to hack the vehicle motion control unit.

A message from a malfunctioning component does not affect operation of the actuator of the receiving actuator control modules as it recognizes that it does not originate from the central controller. In some embodiments an actuator control module having received a message that does not originate from the central controller submits a corresponding alert message to the central controller.

In some embodiments the central controller 6 is configured to prepare an encrypted instruction message by incorporating into the instruction message in addition to the motion control instruction a digital signature of the central controller and the actuator control module, e.g. 40FL to which the encrypted instruction message is transmitted is configured to verify the digital signature to confirm whether or not the encrypted instruction message originates from the central controller. In examples thereof the motion control instruction itself is not encrypted. This contributes to a modest computational load. Nevertheless, even if the actuator control module has confirmed that the message originates from the central controller 6, it may exceptionally happen that the message was erroneously transmitted. In some examples the actuator control module to which the encrypted instruction message is transmitted is configured to verify the digital signature to confirm whether or not the motion control instruction conveyed by the message was modified during the transmission. In an example an actuator control module detecting an error in the received motion control instruction requests the central controller 6 to resend the message.

In further embodiments, the central controller 6 is configured to encode the message in a redundant manner for transmission by the control system network allowing the receiving actuator control module to perform an error detection and correction step. One example thereof is a Reed-Solomon encoding-decoding procedure.

While embodiments were shown for messaging protocols, also alternative ways may be envisaged by those skilled in the art having the benefit of the present invention for achieving a similar function and result. Components may be combined or split up into one or more alternative components. For example a brake actuator control module may be combined with a vehicle interface module. As another example a brake actuator control module may be provided as a plurality of redundant brake actuator control module elements at mutually distant locations of the vehicle. Communication between system elements may take place via wired connections, e.g. for electronic or optical communication. Alternatively or additionally wireless communication may be provided. The various elements of the embodiments as discussed and shown offer certain advantages, such as an improved vehicle stability, a faster response, a reduced computational load and the like. It is appreciated that this invention offers particular advantages to brake systems, and in general can be applied for any application in a vehicle.

As observed in the description, an encryption-decryption procedure, wherein the central controller encrypts its instruction messages and the actuator control modules decrypt the instruction messages, also contributes to a more reliable, coherent operation of a motion control actuator in cooperation with other motion control actuators, as it prevents that one motion control actuator responds in a deviating manner due to a spurious message that does not originate from the central controller. Hence, also in case the encryption-decryption procedure is performed without restricting the motion control actuators to operate according to a function of time in a common time frame a more coherent operation of the motion control actuators is achieved. A dispersion in time due to the encryption-decryption process can be avoided with a requirement that the motion control actuators perform the decryption process in a same, predetermined number of clock cycles.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope.

### LIST OF REFERENCE NUMBERS

- 1: motion control system
- 4; 4FL, 4FR, 4RL, 4RR: smart actuator, smart brake actuator
- 6: central controller
- 7FL,7FR,7RL, 7RR: vehicle interface modules
- 8: system network
- 9: movement control unit
- 10: vehicle
- 11; 11FL, 11FR, 11RL, 11RR: wheel
- 12: wheel speed sensor
- 40; 40FL, 40FR, 40RL, 40RR: actuator control module
- 41: bus interface
- 42, 42B, 42FL: driver control component
- 43: speed acquisition component
- 44: actuator driver
- 44B: backup actuator driver
- 45: actuator
- 45; 45FL,45FR,45RL,45RR: brake actuator
- 47: local clock
- 48FL: a decryption component
- 61: motion control functions
- 62: signal processing functions
- 63: actuator control functions
- 64: central clock
- 65: message encryption component
- 91: movement decision logic
- 92: data computing resources
- 93: environment sensors
- 94: infra structure interface
- 100: motion control unit

## Claims

1. A vehicle motion control system (100) for a vehicle (10), comprising:
a control system network (8), and having communicatively coupled thereto a central controller (6), and a plurality of actuator control modules (40; 40FL, 40FR, 40RL, 40RR) each for controlling respective sets of one or more motion control actuators (45FL, 45FR, 45RL, 45RR) to control a motion of the vehicle (10),
wherein the central controller is configured to transmit a respective motion control instruction message conveying a motion control instruction to one or more of the plurality of actuator control modules, the motion control instruction instructing an actuator control module to cause its set of one or more motion control actuators to perform a motion control action as a function of time in a common reference time frame;
wherein said actuator control module having received the motion control instruction message is configured to accordingly execute said motion control instruction, **characterized in that** said actuator control module (40; 40FL, 40FR, 40RL, 40RR) is configured to cause its set of one or more motion control actuators to start performing the motion control action at a specified reference point in time in the common reference time frame if that succeeds a time of receipt of the message, and to cause the set of one or more motion control actuators to start performing the motion control action immediately upon receipt of the motion control instruction message otherwise.

2. The vehicle motion control system (100) according to claim 1, wherein the central controller (6) comprises a central clock (64), wherein at least one actuator control module (40) comprises a local clock (47) and wherein the central controller (6) is configured to transmit a synchronization message to said actuator control module enabling said actuator control module to synchronize its local clock with the central clock.

3. The vehicle motion control system (100) according to claim 2, wherein the at least one actuator control module (40) is one of a plurality of actuator control modules (40; 40FL, 40FR, 40RL, 40RR) having a proper local clock and wherein the central controller (6) is configured to multicast the synchronization message to each of said actuator control modules enabling said actuator control modules to synchronize their local clock with the central clock.

4. The vehicle motion control system (100) according to one or more of the preceding claims, wherein an actuator control module (40; 40FL, 40FR, 40RL, 40RR) receiving a motion control instruction message at a point in time succeeding a point in time at which it is instructed to perform the motion control action directly proceeds to cause its set of motion control actuators to perform the motion control action.

5. The vehicle motion control system (100) according to one or more of the preceding claims, wherein a motion control instruction specifies that the motion control action is to be performed according to a function of time in a time interval starting at a point in time succeeding the time of transmission of the motion control instruction message by the central controller.

6. The vehicle motion control system (100) according to one or more of the preceding claims, wherein the central controller (6) is configured to transmit a subsequent motion control instruction message to an actuator control module and wherein said actuator control module is configured to execute the motion control instruction specified in the subsequent motion control instruction message instead of a motion control action specified in a preceding motion control instruction message of which execution was not yet performed or completed.

7. The vehicle motion control system (100) according to one or more of the preceding claims,
wherein the central controller (6) is configured to prepare an encrypted instruction message conveying the motion control instruction and to transmit the encrypted instruction message via the control system network to at least one actuator control module (40; 40FL, 40FR, 40RL, 40RR);
wherein the at least one actuator control module is configured to receive the encrypted instruction message, to decrypt the received encrypted instruction message to retrieve the motion control instruction conveyed therewith, and to cause its at least one motion control actuator to perform said motion control action.

8. The vehicle motion control system (100) according to claim 7, wherein the central controller (6) is configured to prepare an encrypted instruction message by incorporating into the instruction message in addition to the motion control instruction a digital signature of the central controller and wherein the at least one actuator control module (40; 40FL, 40FR, 40RL, 40RR) to which the encrypted instruction message is transmitted is configured to verify the digital signature to confirm whether or not the encrypted instruction message originates from the central controller.

9. The vehicle motion control system (100) according to claim 8, wherein the at least one actuator control module (40; 40FL, 40FR, 40RL, 40RR) to which the encrypted instruction message is transmitted is configured to verify the digital signature to confirm whether or not the motion control instruction conveyed by the message was modified during the transmission.

10. The vehicle motion control system (100) according to claim 8 or 9, wherein the central controller (6) is configured to encode the message for transmission by the control system network (8) allowing the receiving actuator control module (40; 40FL, 40FR, 40RL, 40RR) to perform an error detection and correction procedure.

11. A vehicle (10) comprising in addition to a vehicle motion control system (100) according to one or more of the preceding claims a pair of rear wheels (11RL, 11RR), a pair of front wheels (11FL, 11FR), wherein the respective sets of one or more motion control actuators (45FL, 45FR, 45RL, 45RR) are provided to control motion of respective ones of the wheels.

12. A smart brake actuator (4; 4FL, 4FR, 4RL, 4RR) comprising a brake actuator (45; 45FL, 45FR, 45RL, 45RR) for a vehicle and a brake actuator control module (40; 40FL, 40FR, 40RL, 40RR) for controlling the brake actuator, wherein the brake actuator control module is configured to receive a brake control instruction message from a central controller (6), the brake control instruction message conveying a brake control instruction that instructs the brake actuator control module to cause the brake actuator to perform a brake action as a function of time in a reference time frame common with the central controller, instructing the brake actuator control module not to cause the brake actuator to perform the brake action before a specified reference point in time in the common reference time frame, **characterized in that** said brake actuator control module having received the brake control instruction message is configured to cause the brake actuator to start performing the brake action at the specified reference point in time if that succeeds a time of receipt of the message, and to cause the brake actuator to start performing the brake action immediately upon receipt of the brake control instruction message otherwise.

13. A smart brake actuator (4; 4FL, 4FR, 4RL, 4RR) according to claim 12, wherein the brake actuator control module (40; 40FL, 40FR, 40RL, 40RR) is configured to receive an encrypted brake control instruction message, to decrypt the received encrypted instruction message to retrieve the brake control instruction conveyed therewith, to verify authenticity of the received encrypted instruction message and to cause the brake actuator (45; 45FL, 45FR, 45RL, 45RR) to perform the brake action specified subject to confirming that the received encrypted instruction message is authentic.

14. A method of controlling operation of a plurality of motion control actuators (45; 45FL, 45FR, 45RL, 45RR) in a vehicle (10), the method comprising:
a central controller (6) receiving (S1) a driving instruction indicative for a desired motion or change of motion of the vehicle (10);
the central controller (6) computing (S2) actions to be performed by a coherent operation of two or more sets of one or more of the motion control actuators (45; 45FL, 45FR, 45RL, 45RR) as a function of time to achieve the desired motion or change of motion of the vehicle (10);
the central controller (6) transmitting (S3) via control system network (8) respective instruction messages to respective actuator control modules (40; 40FL, 40FR, 40RL, 40RR), each being configured for control of a respective one of the two or more sets of one or more of said motion control actuators,
an actuator control module (40; 40FL, 40FR, 40RL, 40RR) receiving an instruction message performing a motion control instruction conveyed with the instruction message, wherein the actuator control module causes its associated set of one or more motion control actuators (45; 45FL, 45FR, 45RL, 45RR) to perform a motion control action as a function of time in a common reference time frame as specified in the motion control instruction, **characterized in that** the actuator control module starts performing the motion control action at a specified reference point in time in the common reference time frame if that succeeds a time of receipt of the message, and starts performing the motion control action immediately upon receipt of the motion control instruction message otherwise.

15. The method according to claim 14, wherein the central controller (6) prepares an encrypted instruction message conveying the motion control instruction, transmits the encrypted instruction message via the control system network (8) to at least one actuator control module and wherein the at least one actuator control module after having received the encrypted instruction message, decrypts the received encrypted instruction message to retrieve the motion control instruction conveyed therewith, and subject to confirming that the conveyed motion control instruction is authentic causes its at least one motion control actuator to perform said motion control action.

## Patentansprüche

1. Fahrzeugbewegungssteuerungssystem (100) für ein Fahrzeug (10), umfassend:
ein Steuerungssystemnetzwerk (8), mit einer damit kommunikativ gekoppelten zentralen Steuerung (6) und einer Mehrzahl von Aktuatorsteuermodulen (40; 40FL, 40FR, 40RL, 40RR), die jeweils zum Steuern jeweiliger Sätze eines oder mehrerer Bewegungssteuerungsaktuatoren (45FL, 45FR, 45RL, 45RR) vorgesehen sind, um eine Bewegung des Fahrzeugs (10) zu steuern,
wobei die zentrale Steuerung dazu konfiguriert ist, eine jeweilige Bewegungssteuerungsanweisungsnachricht, die eine Bewegungssteuerungsanweisung übermittelt, an eines oder mehrere der Mehrzahl von Aktuatorsteuermodulen zu übertragen, wobei die Bewegungssteuerungsanweisung ein Aktuatorsteuermodul anweist, seinen Satz eines oder mehrerer Bewegungssteuerungsaktuatoren zu veranlassen, eine Bewegungssteuerungsaktion als Funktion der Zeit in einem gemeinsamen Referenzzeitrahmen durchzuführen;
wobei das Aktuatorsteuermodul, das die Bewegungssteuerungsanweisungsnachricht empfangen hat, dazu konfiguriert ist, die Bewegungssteuerungsanweisung dementsprechend auszuführen, **dadurch gekennzeichnet, dass** das Aktuatorsteuermodul (40; 40FL, 40FR, 40RL, 40RR) dazu konfiguriert ist, seinen Satz eines oder mehrerer Bewegungssteuerungsaktuatoren zu veranlassen, mit der Durchführung der Bewegungssteuerungsaktion zu einem spezifizierten Referenzzeitpunkt in dem gemeinsamen Referenzzeitrahmen zu beginnen, falls dieser nach einem Empfangszeitpunkt der Nachricht liegt, und andernfalls den Satz eines oder mehrerer Bewegungssteuerungsaktuatoren zu veranlassen, unmittelbar nach Empfang der Bewegungssteuerungsanweisungsnachricht mit der Durchführung der Bewegungssteuerungsaktion zu beginnen.

2. Fahrzeugbewegungssteuerungssystem (100) nach Anspruch 1, wobei die zentrale Steuerung (6) eine zentrale Uhr (64) umfasst, wobei mindestens ein Aktuatorsteuermodul (40) eine lokale Uhr (47) umfasst und wobei die zentrale Steuerung (6) dazu konfiguriert ist, eine Synchronisationsnachricht an das Aktuatorsteuermodul zu übertragen, die es dem Aktuatorsteuermodul ermöglicht, seine lokale Uhr mit der zentralen Uhr zu synchronisieren.

3. Fahrzeugbewegungssteuerungssystem (100) nach Anspruch 2, wobei das mindestens eine Aktuatorsteuermodul (40) eines einer Mehrzahl von Aktuatorsteuermodulen (40; 40FL, 40FR, 40RL, 40RR) mit jeweils einer eigenen lokalen Uhr ist und wobei die zentrale Steuerung (6) dazu konfiguriert ist, die Synchronisationsnachricht per Multicast an jedes der Aktuatorsteuermodule zu übertragen, wodurch es den Aktuatorsteuermodulen ermöglicht wird, ihre lokale Uhr mit der zentralen Uhr zu synchronisieren.

4. Fahrzeugbewegungssteuerungssystem (100) nach einem oder mehreren der vorhergehenden Ansprüche, wobei ein Aktuatorsteuermodul (40; 40FL, 40FR, 40RL, 40RR), das eine Bewegungssteuerungsanweisungsnachricht zu einem Zeitpunkt empfängt, der nach einem Zeitpunkt liegt, zu dem es angewiesen ist, die Bewegungssteuerungsaktion durchzuführen, unmittelbar dazu übergeht, seinen Satz von Bewegungssteuerungsaktuatoren zu veranlassen, die Bewegungssteuerungsaktion durchzuführen.

5. Fahrzeugbewegungssteuerungssystem (100) nach einem oder mehreren der vorhergehenden Ansprüche, wobei eine Bewegungssteuerungsanweisung spezifiziert, dass die Bewegungssteuerungsaktion gemäß einer Funktion der Zeit in einem Zeitintervall durchzuführen ist, das zu einem Zeitpunkt beginnt, der nach dem Zeitpunkt der Übertragung der Bewegungssteuerungsanweisungsnachricht durch die zentrale Steuerung liegt.

6. Fahrzeugbewegungssteuerungssystem (100) nach einem oder mehreren der vorhergehenden Ansprüche, wobei die zentrale Steuerung (6) dazu konfiguriert ist, eine nachfolgende Bewegungssteuerungsanweisungsnachricht an ein Aktuatorsteuermodul zu übertragen, und wobei das Aktuatorsteuermodul dazu konfiguriert ist, die in der nachfolgenden Bewegungssteuerungsanweisungsnachricht spezifizierte Bewegungssteuerungsanweisung anstelle einer in einer vorhergehenden Bewegungssteuerungsanweisungsnachricht spezifizierten Bewegungssteuerungsaktion auszuführen, deren Ausführung noch nicht durchgeführt oder abgeschlossen wurde.

7. Fahrzeugbewegungssteuerungssystem (100) nach einem oder mehreren der vorhergehenden Ansprüche,
wobei die zentrale Steuerung (6) dazu konfiguriert ist, eine verschlüsselte Anweisungsnachricht vorzubereiten, welche die Bewegungssteuerungsanweisung übermittelt, und die verschlüsselte Anweisungsnachricht über das Steuerungssystemnetzwerk an mindestens ein Aktuatorsteuermodul (40; 40FL, 40FR, 40RL, 40RR) zu übertragen;
wobei das mindestens eine Aktuatorsteuermodul dazu konfiguriert ist, die verschlüsselte Anweisungsnachricht zu empfangen, die empfangene verschlüsselte Anweisungsnachricht zu entschlüsseln, um die damit übermittelte Bewegungssteuerungsanweisung abzurufen, und seinen mindestens einen Bewegungssteuerungsaktuator zu veranlassen, die Bewegungssteuerungsaktion durchzuführen.

8. Fahrzeugbewegungssteuerungssystem (100) nach Anspruch 7, wobei die zentrale Steuerung (6) dazu konfiguriert ist, eine verschlüsselte Anweisungsnachricht vorzubereiten, indem zusätzlich zu der Bewegungssteuerungsanweisung eine digitale Signatur der zentralen Steuerung in die Anweisungsnachricht aufgenommen wird, und wobei das mindestens eine Aktuatorsteuermodul (40; 40FL, 40FR, 40RL, 40RR), an das die verschlüsselte Anweisungsnachricht übertragen wird, dazu konfiguriert ist, die digitale Signatur zu verifizieren, um zu bestätigen, ob die verschlüsselte Anweisungsnachricht von der zentralen Steuerung stammt oder nicht.

9. Fahrzeugbewegungssteuerungssystem (100) nach Anspruch 8, wobei das mindestens eine Aktuatorsteuermodul (40; 40FL, 40FR, 40RL, 40RR), an das die verschlüsselte Anweisungsnachricht übertragen wird, dazu konfiguriert ist, die digitale Signatur zu verifizieren, um zu bestätigen, ob die durch die Nachricht übermittelte Bewegungssteuerungsanweisung während der Übertragung modifiziert wurde oder nicht.

10. Fahrzeugbewegungssteuerungssystem (100) nach Anspruch 8 oder 9, wobei die zentrale Steuerung (6) dazu konfiguriert ist, die Nachricht zur Übertragung durch das Steuerungssystemnetzwerk (8) zu codieren, wodurch es dem empfangenden Aktuatorsteuermodul (40; 40FL, 40FR, 40RL, 40RR) ermöglicht wird, ein Fehlererkennungs- und Fehlerkorrekturverfahren durchzuführen.

11. Fahrzeug (10), umfassend, zusätzlich zu einem Fahrzeugbewegungssteuerungssystem (100) nach einem oder mehreren der vorhergehenden Ansprüche, ein Paar Hinterräder (11RL, 11RR) und ein Paar Vorderräder (11FL, 11FR), wobei die jeweiligen Sätze eines oder mehrerer Bewegungssteuerungsaktuatoren (45FL, 45FR, 45RL, 45RR) vorgesehen sind, um die Bewegung jeweiliger Räder zu steuern.

12. Intelligenter Bremsaktuator (4; 4FL, 4FR, 4RL, 4RR), umfassend einen Bremsaktuator (45; 45FL, 45FR, 45RL, 45RR) für ein Fahrzeug und ein Bremsaktuatorsteuermodul (40; 40FL, 40FR, 40RL, 40RR) zum Steuern des Bremsaktuators, wobei das Bremsaktuatorsteuermodul dazu konfiguriert ist, eine Bremssteuerungsanweisungsnachricht von einer zentralen Steuerung (6) zu empfangen, wobei die Bremssteuerungsanweisungsnachricht eine Bremssteuerungsanweisung übermittelt, die das Bremsaktuatorsteuermodul anweist, den Bremsaktuator zu veranlassen, eine Bremsaktion als Funktion der Zeit in einem mit der zentralen Steuerung gemeinsamen Referenzzeitrahmen durchzuführen, und das Bremsaktuatorsteuermodul anweist, den Bremsaktuator nicht zu veranlassen, die Bremsaktion vor einem spezifizierten Referenzzeitpunkt in dem gemeinsamen Referenzzeitrahmen durchzuführen, **dadurch gekennzeichnet, dass** das Bremsaktuatorsteuermodul, das die Bremssteuerungsanweisungsnachricht empfangen hat, dazu konfiguriert ist, den Bremsaktuator zu veranlassen, mit der Durchführung der Bremsaktion zu dem spezifizierten Referenzzeitpunkt zu beginnen, falls dieser nach einem Empfangszeitpunkt der Nachricht liegt, und andernfalls den Bremsaktuator zu veranlassen, unmittelbar nach Empfang der Bremssteuerungsanweisungsnachricht mit der Durchführung der Bremsaktion zu beginnen.

13. Intelligenter Bremsaktuator (4; 4FL, 4FR, 4RL, 4RR) nach Anspruch 12, wobei das Bremsaktuatorsteuermodul (40; 40FL, 40FR, 40RL, 40RR) dazu konfiguriert ist, eine verschlüsselte Bremssteuerungsanweisungsnachricht zu empfangen, die empfangene verschlüsselte Anweisungsnachricht zu entschlüsseln, um die damit übermittelte Bremssteuerungsanweisung abzurufen, die Authentizität der empfangenen verschlüsselten Anweisungsnachricht zu verifizieren und, vorbehaltlich der Bestätigung, dass die empfangene verschlüsselte Anweisungsnachricht authentisch ist, den Bremsaktuator (45; 45FL, 45FR, 45RL, 45RR) zu veranlassen, die spezifizierte Bremsaktion durchzuführen.

14. Verfahren zum Steuern des Betriebs einer Mehrzahl von Bewegungssteuerungsaktuatoren (45; 45FL, 45FR, 45RL, 45RR) in einem Fahrzeug (10), wobei das Verfahren umfasst:
Empfangen (S1), durch eine zentrale Steuerung (6), einer Fahranweisung, die eine gewünschte Bewegung oder Bewegungsänderung des Fahrzeugs (10) angibt;
Berechnen (S2), durch die zentrale Steuerung (6), von Aktionen, die durch einen kohärenten Betrieb von zwei oder mehr Sätzen eines oder mehrerer der Bewegungssteuerungsaktuatoren (45; 45FL, 45FR, 45RL, 45RR) als Funktion der Zeit durchzuführen sind, um die gewünschte Bewegung oder Bewegungsänderung des Fahrzeugs (10) zu erreichen;
Übertragen (S3), durch die zentrale Steuerung (6), jeweiliger Anweisungsnachrichten über das Steuerungssystemnetzwerk (8) an jeweilige Aktuatorsteuermodule (40; 40FL, 40FR, 40RL, 40RR), die jeweils zum Steuern eines jeweiligen der zwei oder mehr Sätze eines oder mehrerer der Bewegungssteuerungsaktuatoren konfiguriert sind,
wobei ein Aktuatorsteuermodul (40; 40FL, 40FR, 40RL, 40RR), das eine Anweisungsnachricht empfängt, eine mit der Anweisungsnachricht übermittelte Bewegungssteuerungsanweisung durchführt, wobei das Aktuatorsteuermodul seinen zugeordneten Satz eines oder mehrerer Bewegungssteuerungsaktuatoren (45; 45FL, 45FR, 45RL, 45RR) veranlasst, eine Bewegungssteuerungsaktion als Funktion der Zeit in einem gemeinsamen Referenzzeitrahmen durchzuführen, wie in der Bewegungssteuerungsanweisung spezifiziert, **dadurch gekennzeichnet, dass** das Aktuatorsteuermodul zu einem spezifizierten Referenzzeitpunkt in dem gemeinsamen Referenzzeitrahmen mit der Durchführung der Bewegungssteuerungsaktion beginnt, falls dieser nach einem Empfangszeitpunkt der Nachricht liegt, und andernfalls unmittelbar nach Empfang der Bewegungssteuerungsanweisungsnachricht mit der Durchführung der Bewegungssteuerungsaktion beginnt.

15. Verfahren nach Anspruch 14, wobei die zentrale Steuerung (6) eine verschlüsselte Anweisungsnachricht vorbereitet, welche die Bewegungssteuerungsanweisung übermittelt, die verschlüsselte Anweisungsnachricht über das Steuerungssystemnetzwerk (8) an mindestens ein Aktuatorsteuermodul überträgt und wobei das mindestens eine Aktuatorsteuermodul nach Empfang der verschlüsselten Anweisungsnachricht die empfangene verschlüsselte Anweisungsnachricht entschlüsselt, um die damit übermittelte Bewegungssteuerungsanweisung abzurufen, und, vorbehaltlich der Bestätigung, dass die übermittelte Bewegungssteuerungsanweisung authentisch ist, seinen mindestens einen Bewegungssteuerungsaktuator veranlasst, die Bewegungssteuerungsaktion durchzuführen.

## Revendications

1. Système de commande de mouvement de véhicule (100) pour un véhicule (10), comprenant :
un réseau de système de commande (8) auquel sont couplés de manière communicative un contrôleur central (6) et une pluralité de modules de commande d'actionneurs (40 ; 40FL, 40FR, 40RL, 40RR), chacun destiné à commander des ensembles respectifs d'un ou plusieurs actionneurs de commande de mouvement (45FL, 45FR, 45RL, 45RR) pour commander un mouvement du véhicule (10),
dans lequel le contrôleur central est configuré pour transmettre un message d'instruction de commande de mouvement respectif transportant une instruction de commande de mouvement à un ou plusieurs de la pluralité de modules de commande d'actionneurs, l'instruction de commande de mouvement ordonnant à un module de commande d'actionneur d'amener son ensemble d'un ou plusieurs actionneurs de commande de mouvement à réaliser une action de commande de mouvement en fonction du temps dans un délai de référence commun ;
dans lequel ledit module de commande d'actionneur qui a reçu le message d'instruction de commande de mouvement est configuré pour exécuter en conséquence ladite instruction de commande de mouvement, **caractérisé en ce que** ledit module de commande d'actionneur (40 ; 40FL, 40FR, 40RL, 40RR) est configuré pour amener son ensemble d'un ou plusieurs actionneurs de commande de mouvement à commencer à réaliser l'action de commande de mouvement à un instant de référence spécifié dans le délai de référence commun si celui-ci est postérieur à un temps de réception du message, et pour amener l'ensemble d'un ou plusieurs actionneurs de commande de mouvement à commencer à réaliser l'action de commande de mouvement immédiatement à la réception du message d'instruction de commande de mouvement dans le cas contraire.

2. Système de commande de mouvement de véhicule (100) selon la revendication 1, dans lequel le contrôleur central (6) comprend une horloge centrale (64), dans lequel au moins un module de commande d'actionneur (40) comprend une horloge locale (47), et dans lequel le contrôleur central (6) est configuré pour transmettre un message de synchronisation audit module de commande d'actionneur permettant audit module de commande d'actionneur de synchroniser son horloge locale avec l'horloge centrale.

3. Système de commande de mouvement de véhicule (100) selon la revendication 2, dans lequel l'au moins un module de commande d'actionneur (40) est l'un d'une pluralité de modules de commande d'actionneurs (40 ; 40FL, 40FR, 40RL, 40RR) doté d'une horloge locale propre, et dans lequel le contrôleur central (6) est configuré pour effectuer une multidiffusion du message de synchronisation vers chacun desdits modules de commande d'actionneurs permettant auxdits modules de commande d'actionneurs de synchroniser leurs horloges locales avec l'horloge centrale.

4. Système de commande de mouvement de véhicule (100) selon une ou plusieurs des revendications précédentes, dans lequel un module de commande d'actionneur (40 ; 40FL, 40FR, 40RL, 40RR) recevant un message d'instruction de commande de mouvement à un instant succédant à un instant auquel l'instruction lui a été donnée de réaliser l'action de commande de mouvement procède directement à l'opération d'amener son ensemble d'actionneurs de commande de mouvement à réaliser l'action de commande de mouvement.

5. Système de commande de mouvement de véhicule (100) selon une ou plusieurs des revendications précédentes, dans lequel une instruction de commande de mouvement spécifie que l'action de commande de mouvement doit être réalisée en fonction du temps dans un intervalle de temps commençant à un instant succédant au temps de transmission du message d'instruction de commande de mouvement par le contrôleur central.

6. Système de commande de mouvement de véhicule (100) selon une ou plusieurs des revendications précédentes, dans lequel le contrôleur central (6) est configuré pour transmettre un message d'instruction de commande de mouvement ultérieur à un module de commande d'actionneur, et dans lequel ledit module de commande d'actionneur est configuré pour exécuter l'instruction de commande de mouvement spécifiée dans le message d'instruction de commande de mouvement ultérieur au lieu d'une action de commande de mouvement spécifiée dans un message d'instruction de commande de mouvement précédent dont l'exécution n'a pas encore été réalisée ou achevée.

7. Système de commande de mouvement de véhicule (100) selon une ou plusieurs des revendications précédentes,
dans lequel le contrôleur central (6) est configuré pour préparer un message d'instruction chiffré transportant l'instruction de commande de mouvement et pour transmettre le message d'instruction chiffré via le réseau de système de commande à au moins un module de commande d'actionneur (40 ; 40FL, 40FR, 40RL, 40RR) ;
dans lequel l'au moins un module de commande d'actionneur est configuré pour recevoir le message d'instruction chiffré, pour déchiffrer le message d'instruction chiffré reçu afin de récupérer l'instruction de commande de mouvement qu'il transporte, et pour amener son au moins un actionneur de commande de mouvement à réaliser ladite action de commande de mouvement.

8. Système de commande de mouvement de véhicule (100) selon la revendication 7, dans lequel le contrôleur central (6) est configuré pour préparer un message d'instruction chiffré en incorporant dans le message d'instruction en plus de l'instruction de commande de mouvement une signature numérique du contrôleur central, et dans lequel l'au moins un module de commande d'actionneur (40 ; 40FL, 40FR, 40RL, 40RR) auquel le message d'instruction chiffré est transmis est configuré pour vérifier la signature numérique afin de confirmer si le message d'instruction chiffré provient ou non du contrôleur central.

9. Système de commande de mouvement de véhicule (100) selon la revendication 8, dans lequel l'au moins un module de commande d'actionneur (40 ; 40FL, 40FR, 40RL, 40RR) auquel le message d'instruction chiffré est transmis est configuré pour vérifier la signature numérique afin de confirmer si l'instruction de commande de mouvement transportée par le message a été modifiée ou non pendant la transmission.

10. Système de commande de mouvement de véhicule (100) selon la revendication 8 ou 9, dans lequel le contrôleur central (6) est configuré pour coder le message pour sa transmission par le réseau de système de commande (8), ce qui permet au module de commande d'actionneur (40 ; 40FL, 40FR, 40RL, 40RR) de réception de réaliser une procédure de détection et de correction d'erreurs.

11. Véhicule (10) comprenant, en plus d'un système de commande de mouvement de véhicule (100) selon une ou plusieurs des revendications précédentes, une paire de roues arrière (URL, 11RR) et une paire de roues avant (11FL, 11FR), dans lequel les ensembles respectifs d'un ou plusieurs actionneurs de commande de mouvement (45FL, 45FR, 45RL, 45RR) sont prévus pour commander le mouvement de roues respectives des roues.

12. Actionneur de frein intelligent (4 ; 4FL, 4FR, 4RL, 4RR) comprenant un actionneur de frein (45 ; 45FL, 45FR, 45RL, 45RR) pour un véhicule et un module de commande d'actionneur de frein (40 ; 40FL, 40FR, 40RL, 40RR) pour commander l'actionneur de frein, dans lequel le module de commande d'actionneur de frein est configuré pour recevoir un message d'instruction de commande de frein en provenance d'un contrôleur central (6), le message d'instruction de commande de frein transportant une instruction de commande de frein qui ordonne au module de commande d'actionneur de frein d'amener l'actionneur de frein à réaliser une action de frein en fonction du temps dans un délai de référence commun avec le contrôleur central, en ordonnant au module de commande d'actionneur de frein de ne pas amener l'actionneur de frein à réaliser l'action de frein avant un instant de référence spécifié dans le délai de référence commun, **caractérisé en ce que** ledit module de commande d'actionneur de frein qui a reçu le message d'instruction de commande de frein est configuré pour amener l'actionneur de frein à commencer à réaliser l'action de frein à l'instant de référence spécifié si celui-ci est postérieur à un temps de réception du message, et pour amener l'actionneur de frein à commencer à réaliser l'action de frein immédiatement à la réception du message d'instruction de commande de frein dans le cas contraire.

13. Actionneur de frein intelligent (4 ; 4FL, 4FR, 4RL, 4RR) selon la revendication 12, dans lequel le module de commande d'actionneur de frein (40 ; 40FL, 40FR, 40RL, 40RR) est configuré pour recevoir un message d'instruction de commande de frein chiffré, pour déchiffrer le message d'instruction chiffré reçu afin de récupérer l'instruction de commande de frein qu'il transporte pour vérifier l'authenticité du message d'instruction chiffré reçu, et pour amener l'actionneur de frein (45 ; 45FL, 45FR, 45RL, 45RR) à réaliser l'action de frein spécifiée sous réserve de la confirmation de l'authenticité du message d'instruction chiffré reçu.

14. Procédé de commande du fonctionnement d'une pluralité d'actionneurs de commande de mouvement (45 ; 45FL, 45FR, 45RL, 45RR) dans un véhicule (10), le procédé comprenant les étapes suivantes :
un contrôleur central (6) reçoit (S1) une instruction de conduite indiquant un mouvement ou un changement d'un mouvement souhaité du véhicule (10) ;
le contrôleur central (6) calcule (S2) les actions à réaliser par un fonctionnement cohérent de deux ensembles ou plus d'un ou plusieurs des actionneurs de commande de mouvement (45 ; 45FL, 45FR, 45RL, 45RR) en fonction du temps afin d'accomplir le mouvement ou le changement d'un mouvement souhaité du véhicule (10) ;
le contrôleur central (6) transmet (S3) via un réseau de système de commande (8) des messages d'instruction respectifs à des modules de commande d'actionneurs (40 ; 40FL, 40FR, 40RL, 40RR) respectifs, chacun étant configuré pour commander un ensemble respectif des deux ensembles ou plus d'un ou plusieurs desdits actionneurs de commande de mouvement,
un module de commande d'actionneur (40 ; 40FL, 40FR, 40RL, 40RR) qui reçoit un message d'instruction réalise une instruction de commande de mouvement transportée par le message d'instruction, dans lequel le module de commande d'actionneur amène son ensemble associé d'un ou plusieurs actionneurs de commande de mouvement (45 ; 45FL, 45FR, 45RL, 45RR) à réaliser une action de commande de mouvement en fonction du temps dans un délai de référence commun telle que spécifiée dans l'instruction de commande de mouvement, **caractérisé en ce que** le module de commande d'actionneur commence à réaliser l'action de commande de mouvement à un instant de référence spécifié dans le délai de référence commun si celui-ci est postérieur à un temps de réception du message, et commence à réaliser l'action de commande de mouvement immédiatement à la réception du message d'instruction de commande de mouvement dans le cas contraire.

15. Procédé selon la revendication 14, dans lequel le contrôleur central (6) prépare un message d'instruction chiffré transportant l'instruction de commande de mouvement, transmet le message d'instruction chiffré via le réseau de système de commande (8) à au moins un module de commande d'actionneur, et dans lequel l'au moins un module de commande d'actionneur, après avoir reçu le message d'instruction chiffré, déchiffre le message d'instruction chiffré reçu afin de récupérer l'instruction de commande de mouvement qu'il transporte, et sous réserve de la confirmation de l'authenticité de l'instruction de commande de mouvement transportée, amène son au moins un actionneur de commande de mouvement à réaliser ladite action de commande de mouvement.
